# NEW EUROPEAN PATENT SPECIFICATION

(11) **EP 0 673 276 B2**
(45) Date of publication and mention of the opposition decision: **29.12.1999**
(45) Mention of the grant of the patent: 12.03.1997
(21) Application number: 94902043.2
(22) Date of filing: 08.12.1993
(51) Int. Cl.: B01D 24/20, C02F 1/00

(54) **REMOVAL OF IMPURITIES**
ENTFERNUNG VON VERUNREINIGUNGEN
ELIMINATION D'IMPURETES

(30) Priority: 10.12.1992 GB 9225793; 22.06.1993 GB 9312820; 24.06.1993 GB 9313053
(43) Date of publication of application: 27.09.1995
(73) Proprietor: THAMES WATER UTILITIES LIMITED, Reading Berks. RG1 8DB (GB)
(72) Inventor: FOSTER, David, Surrey GU16 5SR (GB); SANDERS, Trevor, BerkshireRG11 2XF (GB)
(74) Representative: Johnson, Terence Leslie
(86) International application number: GB9302511
(87) International publication number: WO9413381

(56) References cited:
- EP-A- 0 161 912
- EP-A- 0 310 221
- FR-A- 2 656 813
- FR-A- 2 662 454
- GB-A- 406 104
- GB-A- 413 274
- US-A- 4 663 047
- US-A- 5 182 018
- L. Huisman et al., WHO, Geneva, 1974, p. 54
- M.R. Collns et al., "Modifications to the slow sand filtration process for improved removals of trihalomethane precursors", AWWA, Denver, 1989, pp. 44-48
- Prof. Ir. L. Huisman, "Slow sand filtration", Delft University of Technology, 1973, pp. 3-4 and 3-5
- A. J. Rachwal et al., "Advanced techniques for upgrading large scale slow sand filters", in "Slow sand filtration", ed. H.J.D. Graham,..., 1988, pp. 331-347
- Prof. Ir. L. Huisman, "Slow sand filtration", Delft University of Technology, 1982, pp. 50 and 58-65 (please note that this is a later edition of the same D5 that has previously been cited);
- A. Hazen, The filtration of public water supplies, John Wiley & Sons, 1913, pp. 6, 35, 40 and 68
- Barrett et al., Manual of Design for Slow Sand Filtration, AWWA, 1991, pp. 20, 25, 172, 183, 201, and 234;
- Schalekamp, GWA 1991-8;
- AWWA Standard for filtering material B100, 1989
- J.T. Visscher et al., Slow Sand Filtration for community Water Supply, Techn. paper No. 24, Int Ref. Centre for Community Water Supply and Sanitation, The Hague, NL

## Description

The invention relates to removal of impurities, particularly to a slow sand filter which removes impurity(ies) from raw feed water.

In recent years drinking water quality has become a major issue for public and political debate with the issue of pesticides in drinking water receiving much attention. The EC Drinking Water Directive (80/778/EEC) included a limit of 0.1 ug/l for individual pesticides, with the same limit being incorporated in the UK Water Supply (Water Quality) Regulations 1989. For most pesticides this 0.1 ug/l standard is far more stringent than health-based standards set by such bodies as the World Health Organisation and the US EPA.

Small quantities of pesticides, mainly water soluble herbicides, enter the water environment through run-off to rivers and infiltration to groundwaters. This is predominantly a problem in lowland urban and agricultural catchments, such as that covered by the geographical area of the Applicants.

The need to produce a general reduction in background organics and minimise the use of chlorine and the production of its by-products are also major issues for many European and US water suppliers.

Most lowland water treatment plants fall into one of three groups on the basis of water source and type of treatment:
i) Surface water treatment by storage, chemical coagulation, clarification, rapid sand filtration and chlorination;
ii) Surface water treatment by storage, rapid gravity filtration, slow sand filtration and chlorination;
iii) Groundwater treatment usually by chlorination alone, sometimes with rapid sand filtration.

The Applicants provide an average of 2700 Mld of water to more than seven million customers from a total of 123 water treatment works, falling into all three of these categories. Some 75% of the supply is derived from the River Thames and its tributaries, with the majority being treated by slow sand filtration.

These conventional treatment processes are unable consistently to meet the current standards for pesticides, and additional treatment is therefore required.

FR-A-2662454 discloses use in a dwelling of a filter comprising sand and charcoal for the purification of domestic and rain waters.

US-A-4663047 discloses a purification process using a tower of activated carbon as a separate stage in removing pesticides. However, neither discloses the slow sand filter arrangement.

Slow sand filtration is usually carried out in slow sand filters which provide a well established means of removing impurities from raw feed water. They have however a high capital cost and require extensive land. As mentioned previously, current filters are unable consistently to meet required standards of removal of impurities such as pesticides, trihalomethane precursors, organic solvents and volatile organic compounds which affect taste and odour, such as geosmin and 2-Methylisoborneol. Similar considerations apply to removal of colour, total organic carbon (TOC) and assimable organic carbon (AOC).

It is accordingly an object of the invention to seek to mitigate these disadvantages.

According to a first aspect of the invention there is provided a slow sand filter as defined in Claim 1.

It will be understood that the term "pesticides" used herein includes fungicides, herbicides, insecticides and the like.

There may be a single layer comprising granular activated carbon sandwiched between two layers of sand. This provides for efficient utilisation of the carbon.

There may be a lower layer of sand of thickness in the range of about 200 to 400mm, a layer of activated carbon of thickness in the range of about 200mm, suitably 25 to 200mm, and an upper layer of sand of thickness in the range of about 300 to 500mm.

The lower sand layer may be substantially 300mm thick, the granular activated carbon layer substantially 135mm thick and the upper layer of sand substantially 450mm thick.

Preferably there may be modules of activated carbon, particularly for an activated carbon layer thickness of between 25mm - 50mm thickness. Each module may be a substantially square module, for example of about 1m side.

The modules may then be laid in a slow sand filter as desired, preferably the module may be a mat, bag or strip with a boundary or casing of a suitable material such as geotextile material. Thus the activated carbon may be sandwiched between layers of geotextile material.

In order to obviate an uneven distribution of activated carbon, which may result from handling, so that the activated carbon inadvertently moves to one end of a bag for example, the bags may comprise compartments, each of which holds a desired quantity of activated carbon in a positive, i.e. non-shifting, way. The compartments can be formed in any suitable way, by stitching, moulding or the like.

Also the bag and contents may be such as to be regeneratable by being placed straight into a regeneration furnace, so that the complete bags can be regenerated, and then reused.

Alternatively, instead of a modular system a slow sand filter may comprise activated carbon as a layer of say 25mm to 50mm thickness, laid or sandwiched between geotextile layers or mats one of which is laid on a (lower) sand layer, the activated carbon is then laid thereon, and an upper (in use) geotextile layer or mat is then laid over the activated carbon, a sand layer then being laid on the upper geotextile layer. The layers of geotextile may overlap, to provide a comprehensive containment for the activated carbon.

Each layer of the bed may be levelled relative to a laser datum. This ensures uniform filtering and purification.

The laser datum may comprise a laser transmitter set to a desired height of an upper surface of a layer and a receiver on a mobile device for levelling the respective layer to that desired surface height.

The mobile device may comprise a bridge or gantry extending across the slow sand filter for levelling and/or laying a layer, or alternatively the mobile device may comprise a motor device adapted to run on a layer of the bed. Again, the device may comprise a boom having an appropriate reach, the boom preferably being mounted on or at, and extending from the side of the filter.

According to a second aspect of the invention there is provided a method as defined in claim 13.

There is the step of laying a layer of sand, laying a layer of granular activated carbon on the layer of sand, and laying a further layer of sand on the layer of granular activated carbon.

There may be the steps of laying the first-mentioned or lower layer of sand of a thickness in the range of about 200 to 400mm, laying the layer of granular activated carbon on a thickness in the range of about 100 to 200mm, suitably 25 to 200mm, and laying the second-mentioned or upper layer of sand on the granular activated carbon layer of thickness a thickness in the range of about 300 to 500mm.

There may be the steps of laying the lower layer of sand to a substantially 300mm thickness, laying the granular activated carbon to a thickness of substantially 135mm and laying the upper layer of sand to a thickness of substantially 450mm.

The step of levelling the upper surface of at least the lower sand layer and granular activated carbon layer may be carried out using a laser datum.

There may be the steps of providing a laser transmitter set to a desired height of an upper surface of a layer, providing a laser receiver on a mobile device for levelling the respective layer, and moving that mobile device to level the layer according to the laser datum.

The method may also comprise providing an indicator of a desired level which indicator is monitored by an operator of the mobile device for adjusting levelling means of the device.

The method may also comprise providing a bridge or gantry extending across the slow sand filter, for levelling and/or laying a layer. The method may provide for provision of a boom having an appropriate reach, the boom preferably being mounted on and extending from the side of the filter.

The method may further comprise providing a motor device adapted to run on a layer of the bed. This method step may suitably provide a mobile device having scraper bars of substantially 90° angular configuration.

The method may comprise laying the layers in sequential part surface areas of the total area of the slow sand filter until the whole surface area is provided with a sandwich of sand and granular activated carbon.

A slow sand filter is hereinafter described, by way of example, with reference to the accompanying drawings.
Fig.1 is a cross-section through a slow sand filter according to the invention;
Fig.2 is a schematic perspective view of a method of laying and levelling the slow sand filter of Fig.1;
Fig.3 is a schematic transverse sectional view of an alternative method of levelling and/or laying the slow sand filter of Fig.1;
Fig.4 is a transverse sectional view of a levelling device;
Fig. 5 is a schematic perspective view of a particular embodiment of levelling device of Figs. 2, 3 and 4;
Fig. 6 is a plan view of the levelling device of Fig. 5;
Fig. 7 is a sectional view on line "B"-"B" of Fig. 6;
Fig. 8 shows the step of dressing a surface of a layer of sand and a method of laying a slow sand filter according to the invention;
Fig. 9 shows the step of levelling a layer of granular activated carbon; and
Fig. 10 is a graphical representation of pesticide removal using a slow sand filter according to the invention, against a control bed which did not have any additional layer.

Referring to the drawings in which like parts are shown by like numerals, there is shown a slow sand filter 1 comprising, in the sand 2, an additive 3 in the form of a layer of granular activated carbon operative to remove impurities, at least pesticidal ones, from water (not shown in the filter in the Figs.) passing in use through the slow sand filter to be purified thereby.

The granular activated carbon is in the form of a single layer 3 in the embodiment of about 135mm (uncompacted) thickness sandwiched between a lower (as viewed and in use) layer 4 of clean sand of substantially 300mm thickness and an upper (as viewed and as in use) layer 5 of clean sand of substantially 450mm thickness.

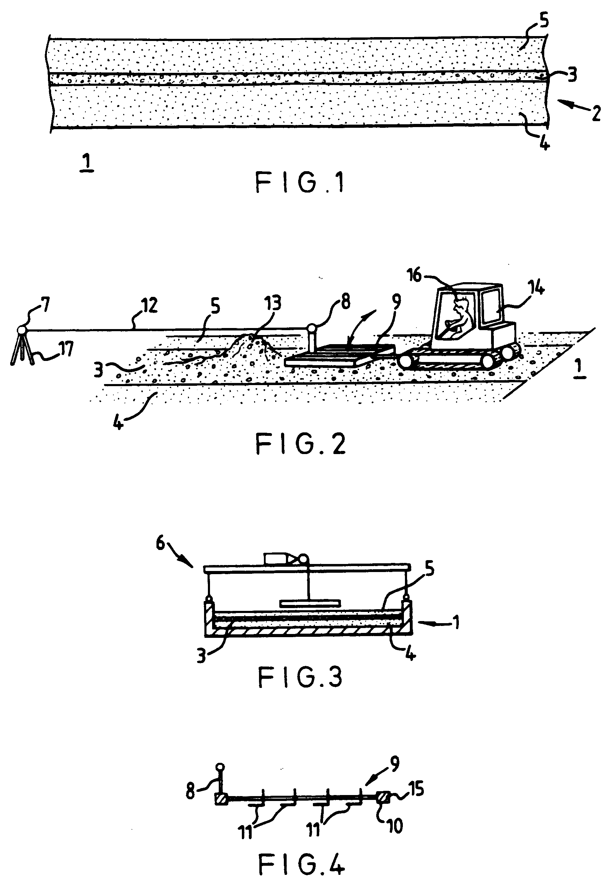

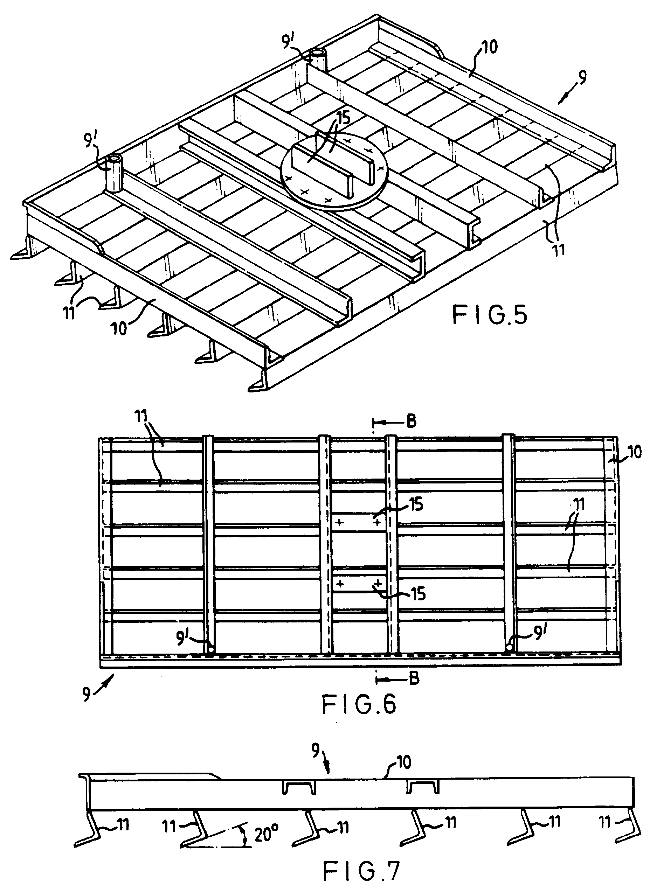

The lower layer 4 of clean sand is firstly laid and levelled. It is delivered to the bed of the filter by suitable means such as a series of motor devices such as dumper trucks, or an overhead bridge or gantry 6 to the bed. In either embodiment, the layer 4 is spread out to the required thickness and with a relatively smooth and level upper surface by a laser datum in the form of a laser transmitter 7 which is set to a required height and a laser receiver 8 which is mounted on a levelling device in the form of a levelling device 9 which has a frame 10 with transverse substantially parallel bars 11 of substantially 90° angular configuration as shown in Figs. 4, 5 and 7. As can be seen (Figs. 5 and 7) the bars 11 are mounted on the frame 10 such that their lower limbs are inclined at about 20° to the horizontal. The laser datum 7, 8 is such that as the device 9 is dragged over the sand 4, to spread and smooth it out, the receiver 8 passes up and down through the laser beam 12 from the transmitter 7, monitors whether it is too high or low and provides a signal to the operator of the gantry 6 or device 9 so that he or she can make appropriate adjustment of the levelling device as it is moved back and forth and up and down (arrow 'X') until the height of the upper surface of the layer 4 is smooth, level, and of the required height, in other words the layer is of the required thickness, any tyre marks being smoothed out where dumpers are used. The laser receiver 8 is mounted in one or other of two sockets 9' mounted on the frame 10 (Fig.5).

The layer of granular activated carbon 3 is then laid on the lower layer of sand, using a similar method. Thus, in the embodiment of Fig.2, the granular activated carbon is delivered to the bed by a series of dumper trucks (not shown) which delivers a pile 13. A mobile grader 14 or tractor with the levelling device 9 of Fig.4 (which has a pivotal connection 15 for connection with a tractor raising and lowering mechanism 15') is then brought up and spreads out the granular activated carbon to form the layer 3 of the required thickness using the laser datum 7,8 as before. In the Fig.2 embodiment, the laser receiver 8 has a direct visual indicator showing the operator 16 in the cab whether the thickness is too great or too little so that he can manoeuvre the levelling device 9 as desired until the required thickness and smoothness is achieved.

It will be understood that the levelling operation is carried out automatically under say hydraulic operation of the levelling device 9.

The upper layer 5 of sand is then applied using a similar laser datum method to achieve a desired thickness and smoothness of the upper layer of sand.

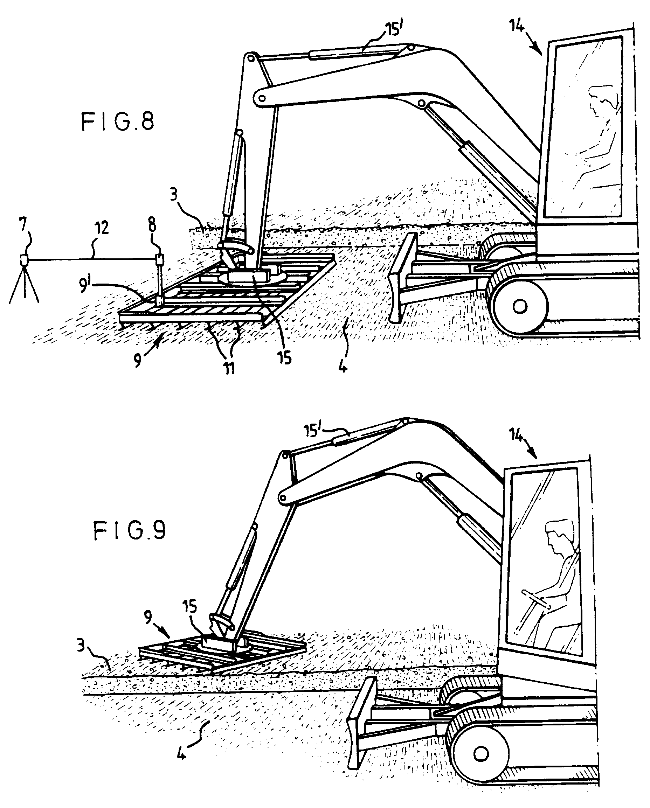

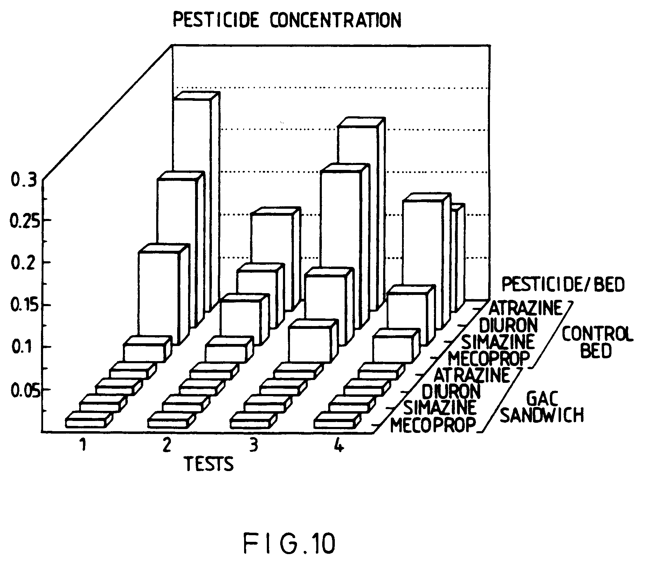

The slow sand sandwich filter of the invention is suitably laid in sections, suitably half at a time as shown in Figs. 8 and 9. Thus the lower layer of clean sand is laid in its entirety. Then half the sandwich is built up as described above. Thus in a rectangular bed, half of a longitudinal extent is laid. The tyre marks of dumpers or the like of the other half are then eradicated from the layer 2 using a bar scraper and smoothing mat arrangement, and then the other half of the sandwich is built up. In building up the sandwich the first application of clean sand of the upper layer 5 is applied relatively gently to the laid layer of granular activated carbon 3 so as not to disrupt the smooth surface or alter the thickness.

The granular activated carbon is also covered with the upper layer of sand 5 as quickly as possible after laying so that it is protected from dispersion by wind, degradation or attrition by frost, or disturbance or depradation by animals or birds.

The granular activated carbon is also delivered dry to a holding store, usually in tankers, from which it is pumped out to a washing plant to remove fines, the washing medium being water. The water drains away, but the carbon remains damp and is laid like this, so helping to avoid dispersion by wind, and also assisting in improving the process of compression of the granules.

The water to be treated may also be pre-treated with ozone (O₃) which can enhance the life of the granular activated carbon prior to exhaustion. It is envisaged however that with or without O₃ pre-treatment a slow sand filter embodying the invention and as described herein with reference to the drawings will remove individual pesticide levels from surface waters to below 0.1 ug/l and total pesticide levels to below 0.1 ug/l for between 12 to 60 months before regeneration of the granular activated carbon falls due. Moreover, a pesticide resistant to ozone such as atrazine can be virtually totally removed using a slow sand filter embodying the invention which is double the removal rate by ozone.

It will be understood that the invention can be applied to existing slow sand filters, or to new ones being installed and commissioned.

In the embodiments, the laser transmitter 7 is portable, being mounted on a tripod 17 which can be set up where required in the bed 2, whichever part of the bed is being laid. The tripod 17 is light and can be moved by one operator, the laser being battery driven. The laser datum can be utilized to map the filter surface, and the height can be adjusted using a telescopic mast or support on which the actual laser transmitter is mounted. Alternatively the laser transmitter can be on a fixed support such as a stainless steel stand on the side of the filter bed.

When the filter 2 is required to be cleaned, the top layer of sand 5 is progressively skimmed down by about 2.50mm, and replaced, therefore with a 450mm thickness top layer, 14 skims or cleans will take place before a thickness of about 100mm sand above the granular activated carbon is reached using a mobile "dry" cleaning machine. This thickness is about the minimum thickness before disruption of the carbon layer ensues. Thus 14 "cleans" can be effected prior to topping up with new sand or removing the granulated activated carbon layer if exhausted, thereby greatly reducing operating costs.

Typical slow sand filters as operated by the Applicants are typically rectangular, 80-120m long and 20-35m wide. Within the filter a 0.7-1.0m deep layer of 0.3mm effective size (ES) sand overlies a layer of drainage gravel and an underdrain system constructed from porous concrete.

During normal operation silt, clay and biological detritus collects gradually at the surface of the filter, increasing the filter headloss and reducing the hydraulic capacity. Slow sand filters are not backwashed, but at intervals of 3-10 weeks each filter is taken out of service, drained down, and the top 25-40mm of sand removed by mechanical skimming plant. The "dirty" sand is cleaned by washing for re-use, while the slow sand filter is returned to service, with the flow being gradually increased over a period of days. When the depth of sand in the filter reaches the operational minimum of 300mm, the filter is taken out of service and re-filled with clean sand. Periodically the bottom 300mm layer is also replaced by clean sand. Using the invention, in a test, a granulated activated carbon sandwich filter was constructed in a 2m x 1m steel tank. A 150mm thick layer of granular activated carbon F400 GAC (ES = 0.7mm) produced by Chemviron Carbon Ltd., was placed on 150mm of 0.3mm ES sand over a gravel underdrain. A further 450mm of sand was placed on top of the granular activated carbon.

The granular activated carbon sandwich filter followed pre-ozonation, primary rapid gravity filtration with (dual media filter with ferric sulphate dosing) and main ozonation. A second pilot slow sand filter, constructed without the granular activated carbon but otherwise identical, was operated in parallel as a control. The target filtration rate for both filters was 0.3 m/hr.

Filtrate samples from both the granulated activated carbon sandwich filter and the control bed have been analysed for pesticides and a range of other organics related parameters. Pesticide analysis was carried out on a periodic basis, with the following pesticides being included in the analysis suite:

| | | | |
|---|---|---|---|
| Atrazine* | Chlortoluron* | Mecroprop* (MCPP) | Dicamba* |
| Simazime* | Linuron* | MCPA | Bromoxynil* |
| Propazine* | Propyzamide* | MCPB | Ioxynil* |
| Diuron* | Prometryne* | 2,4-D | Dalapon* |
| Isoproturon* | Terbutryne* | 2,4,5-T | Pentachlorophenol |

| | | | |
|---|---|---|---|
| *Registered Trade Marks. | | | |

On regular occasions the chlorine demand and trihalomethane (THM) formation potential of the feed and treated waters were determined in laboratory tests, using chlorine contact times from 0.5 hours to 6 days.

A range of other physical/chemical biological and microbiological parameters were monitored on a twice weekly basis, as follows:

**Table 1**

| **Full Scale Process Trial, Routine Monitoring** | | |
|---|---|---|
| Parameter Type | Parameter | Unit |
| Organics related: | Total Organic Carbon (,TOC) | MG/l |
| | UV Absorbance @ 254 nm | Abs/m |
| | Colour | Hazen |
| Physical: | Turbidity | NTU |
| | Particle number analysis (4-80 um) | No/ml |
| | Particle volume analysis (4-80 um) | ppm |
| Biological | Particulate organic carbon (POC) | ug/l |
| | Chlorophyll-a | ug/l |
| | General biology | No. animals/m3 |
| Microbiological: | E.coli (presumptive & confirmed) | No./100ml |
| | Total coliforms (presumptive & confirmed) | No./100ml |
| | Coliform species | No. |
| | Coliform No. types | No. |
| | Aeromonas | No./100ml |

During the course of the trials a number of pesticides have been found in the raw water on a regular basis. These include the herbicides atrazine, simazine, diuron and mecoprop. Other herbicides have been detected on a seasonal or occasional basis.

Results of four individual pesticides are shown in Fig. 10, which compares concentrations in the filtrate from the full scale granular activated carbon sandwich and control beds.

To date no pesticides have been detected in the filtrate from the granular activated carbon sandwich (15,000 bed volumes treated).

Tests have shown that for the variation in feed water total organic carbon (TOC) concentration, and the TOC removal by the granular activated carbon sandwich and control beds, incoming TOC varied from 4 to 8 mg/l, being generally higher in the summer months. TOC removal by the control bed varied between 0 and 40%, with a mean removal of 20%. TOC removal by the granular activated carbon sandwich was 60% after six months operation (5000 BVs).

The granular activated carbon sandwich has also maintained a high degree of colour removal throughout, dropping only 20% over the period of the trial.

Furthermore for all chlorine contact times between 0.5 hours and 6 days the granular activated carbon sandwich bed filtrate had a 60% lower chlorine demand and THM formation potential than the control bed filtrate.

Using the invention described herein with reference to the drawings, has the following advantages:
1. Conventional granular activated carbon media of effective size (ES) 0.7mm can be placed as a 25-200mm sandwich layer within conventional slow sand filter media, ES 0.3mm, with no detriment to normal filter operation or water quality.
2. Removal of organics and non-biodegradable micropollutants such as pesticides is considerably enhanced by the granular activated carbon slow sand filter sandwich adsorber process.
3. The bed and process offers economic benefits compared to conventional solutions, and is rapidly incorporated in existing structures.

## Claims

1. A slow sand filter suitable for lowland water treatment works for removing impurities from water, comprising sand and granular activated carbon adapted to remove impurities from the water, the slow sand filter comprising lower and upper layers (4), (5) of sand separated by a layer (3) of granular activated carbon, the upper layer of sand (5), the lower layer of sand (4) and the layer of granular activated carbon (3) each having respective upper surfaces which are smoothed and levelled whereby to provide layers of desired thickness.

2. A slow sand filter according to claim 1, characterised by the filter comprising a single layer comprising granular activated carbon (3) sandwiched between two layers (4, 5) of sand (2).

3. A slow sand filter according to Claim 2, characterised by a lower layer (4) of sand (2) being of a thickness in the range of about 200 to 400mm, by a layer (3) of activated carbon of thickness in the range of about 25 to 200mm, and by an upper layer (5) of sand (2) being of a thickness in the range of about 300 to 500mm.

4. A slow sand filter according to Claim 3, characterised by the lower sand layer (4) being substantially 300mm thick, by the granular activated carbon layer being (3) substantially 135mm thick, and by the upper layer (5) of sand being substantially 450mm thick.

5. A slow sand filter according to any preceding claim, characterised in that each layer (3, 4, 5) of the filter (1) is levelled relative to a laser datum (7, 8).

6. A slow sand filter according to Claim 5, characterised by the laser datum (7, 8) comprising a laser transmitter (7) set to a desired height of an upper surface of a layer and by a receiver (8) on a mobile device (6, 9) for leveling the respective layer to that desired surface height.

7. A slow sand filter according to Claim 6, characterised by the mobile device comprising a bridge, boom or gantry (6) extending across the slow sand filter (1) for leveling and/or laying a layer (3, 4, 5).

8. A slow sand filter according to Claim 7, characterised by the mobile device comprising a motor device (14) adapted to run on a layer (3, 4, 5) of the bed (1).

9. A slow sand filter according to any preceding claim, characterised by the granular activated carbon (3) comprising a geotextile adjunct.

10. A slow sand filter according to Claim 9, characterised by the geotextile comprising two spaced layers.

11. A slow sand filter according to Claim 9 or Claim 10, characterised by the geotextile comprising a bag.

12. A slow sand filter according to Claim 11, characterised by the bag having an internal partition.

13. A method of providing a slow sand filter suitable for lowland water treatment works for removing impurities from water, comprising providing sand and granular activated carbon adapted to remove impurities from the liquid, laying the sand in layers (4), (5) separated by a layer of granular activated carbon (3), and smoothing and levelling the respective upper surfaces of each of the layers (3), (4) and (5) so they each have a smoothed and levelled upper surface whereby to provide layers of a desired thickness.

14. A method according to Claim 13, characterised by laying only a layer (4) of sand (2), by laying only a layer (3) of granular activated carbon on the layer (4) of sand, and by laying a further layer (5) of sand on the layer (3) of granular activated carbon.

15. A method according to Claim 14, characterised by the steps of laying the first-mentioned or lower layer (4) of sand of a thickness in the range of about 200 to 400mm, by laying the layer (3) of granular activated carbon of a thickness in the range of about 25 - 200mm, and by laying the second-mentioned or upper layer (5) of sand on the granular activated carbon layer (3) of thickness a thickness in a range of about 300 to 500mm.

16. A method according to Claim 15, characterised by the steps of laying the lower layer (4) of sand to a substantially 300mm thickness, by laying the granular activated carbon layer (3) to a thickness of substantially 135mm, and by laying the upper layer (5) of sand to a thickness of substantially 450mm.

17. A method according to any of claims 14 to 16, characterised by levelling the upper surface of at least the lower sand layer (4) and granular activated carbon layer (3) using a laser datum (7, 8).

18. A method according to Claim 17, characterised by the steps of providing a laser transmitter (7) set to a desired height of an upper surface of a layer (3, 4, 5), by providing a laser receiver (8) on a mobile device (6, 9) for levelling the respective layer, and by moving that mobile device (6, 9) to level the layer according to the laser datum (7, 8).

19. A method according to Claim 18, characterised by providing an indicator (12) of a desired level which indicator is monitored by an operator of the mobile device (6, 9) for adjusting leveling means of the device.

20. A method according to Claim 18 or Claim 19, characterised by providing a bridge, boom or gantry (6) extending across the slow sand filter, for levelling and/or laying a layer.

21. A method according to Claim 19 or Claim 20, characterised by providing a motor device (14, 16) adapted to run on a layer (3, 4, 5) of the bed (1).

22. A method according to Claim 18 or Claim 20, characterised by providing a mobile device having scraper bars (11) of substantially 90° angular configuration.

23. A method according to any of Claims 13 to 22, characterised by the steps of laying the layers (3, 4, 5) in sequential part surface areas of the total area of the slow sand filter (1) until the whole surface area is provided with a sandwich of sand and granular activated carbon.

## Patentansprüche

1. Langsamer Sandfilter, geeignet für Wasserbehandlungen im Schwemmland, zum Entfernen von Verunreinigungen aus Wasser, umfassend Sand und körnige Aktivkohle, angepaßt, um Verunreinigungen aus dem Wasser zu entfernen, wobei der langsame Sandfilter obere und untere Schichten (4, 5) aus Sand enthält, die durch eine Schicht (3) aus körniger Aktivkohle getrennt sind, wobei die obere Sandschicht (5), die untere Sandschicht (4) und die körnige Aktivkohleschicht (3) jeweils obere Flächen aufweisen, welche geglättet und eben sind, wodurch Schichten mit einer gewünschten Dicke geschaffen werden.

2. Langsamer Sandfilter nach Anspruch 1, dadurch gekennzeichnet, daß der Filter eine einzelne körnige Aktivkohleschicht (3) umfaßt, welche sandwichartig zwischen zwei Schichten (4, 5) aus Sand (2) angeordnet ist.

3. Langsamer Sandfilter nach Anspruch 2, dadurch gekennzeichnet, daß eine untere Schicht (4) aus Sand (2) eine Dicke in einem Bereich von etwa 200 bis 400 mm aufweist, daß eine Schicht aus Aktivkohle eine Dicke zwischen etwa 25 bis 200 mm aufweist und daß eine obere Schicht (5) aus Sand (2) eine Dicke zwischen etwa 300 bis etwa 500 mm aufweist.

4. Langsamer Sandfilter nach Anspruch 3, dadurch gekennzeichnet, daß die untere Sandschicht (4) im wesentlichen 300 mm dick ist, daß die Schicht (3) aus körniger Aktivkohle im wesentlichen 135 mm dick ist und daß die obere Schicht (5) aus Sand im wesentlichen 450 mm dick ist.

5. Langsamer Sandfilter nach einem der vorhergehenden Ansprüche, dadurch gekennzeichnet, daß jede Schicht (3, 4, 5) des Filters (1) in Bezug auf einen Laser-Bezugspunktgeber (7, 8) geebnet wird.

6. Langsamer Sandfilter nach Anspruch 5, dadurch gekennzeichnet, daß der Laser-Bezugspunktgeber (7, 8) einen Lasersender (7), der auf eine gewünschte Höhe einer oberen Fläche einer Schicht eingestellt ist, und einen Empfänger (8) auf einer beweglichen Vorrichtung (6, 9) zum Einebnen der jeweiligen Schicht auf diese gewünschte Flächenhöhe enthält.

7. Langsamer Sandfilter nach Anspruch 6, dadurch gekennzeichnet, daß die bewegliche Vorrichtung eine Brücke, einen Ausleger oder ein Krangerüst (6) aufweist, das zum Einebnen und/oder Legen einer Schicht (3, 4, 5) quer über den langsamen Sandfilter (1) vorsteht.

8. Langsamer Sandfilter nach Anspruch 7, dadurch gekennzeichnet, daß die bewegliche Vorrichtung eine motorbetriebene Vorrichtung (14) aufweist, die auf einer Schicht (3, 4, 5) des Betts (1) fahren kann.

9. Langsamer Sandfilter nach einem der vorhergehenden Ansprüche, dadurch gekennzeichnet, daß die körnige Aktivkohle (3) einen Geotextil-Zusatz enthält.

10. Langsamer Sandfilter nach Anspruch 9, dadurch gekennzeichnet, daß die Geotextilie zwei beabstandete Schichten aufweist.

11. Langsamer Sandfilter nach Anspruch 9 oder 10, dadurch gekennzeichnet, daß die Geotextilie einen Beutel enthält.

12. Langsamer Sandfilter nach Anspruch 11, dadurch gekennzeichnet, daß der Beutel eine innere Unterteilung aufweist.

13. Verfahren zur Herstellung eines langsamen Sandfilters, geeignet für Wasserbehandlungen im Schwemmland, für die Entfernung von Verunreinigungen aus Wasser, umfassend das Bereitstellen von Sand und körniger Aktivkohle, angepaßt, um Verunreinigungen aus der Flüssigkeit zu entfernen, Legen des Sandes in Schichten (4, 5), getrennt durch eine Schicht körniger Aktivkohle (3), und Glätten und Ebnen der oberen Flächen der Schichten (3, 4, 5), so daß sie jeweils eine geglättete und geebnete obere Fläche aufweisen, um Schichten einer gewünschten Dicke herzustellen.

14. Verfahren nach Anspruch 13, gekennzeichnet durch das Legen nur einer Schicht (4) aus Sand (2), das Legen nur einer Schicht (3) körniger Aktivkohle auf die Schicht (4) aus Sand und das Legen einer weiteren Schicht (5) aus Sand auf die Schicht (3) aus körniger Aktivkohle.

15. Verfahren nach Anspruch 14, gekennzeichnet durch folgende Schritte: Legen der erstgenannten oder unteren Schicht (4) aus Sand in einer Dicke von etwa 200 bis 400 mm, Legen der Schicht (3) aus körniger Aktivkohle in einer Dicke von etwa 25 bis 200 mm, und Legen der zweitgenannten oder oberen Schicht (5) aus Sand auf die Schicht (3) aus körniger Aktivkohle in einer Dicke von etwa 300 und 500 mm.

16. Verfahren nach Anspruch 15, gekennzeichnet durch folgende Schritte: Legen der unteren Schicht (4) aus Sand in einer Dicke von im wesentlichen 300 mm, Legen der körnigen Aktivkohle-Schicht (3) in einer Dicke von im wesentlichen 135 mm, und Legen der oberen Schicht (5) aus Sand in einer Dicke von im wesentlichen 450 mm.

17. Verfahren nach einem der Ansprüche 14 bis 16, gekennzeichnet durch Einebnen der oberen Fläche mindestens der unteren Sandschicht (4) und der Schicht (3) aus körniger Aktivkohle mittels eines Laser-Bezugspunktgebers (7, 8).

18. Verfahren nach Anspruch 17, gekennzeichnet durch folgende Schritte: Bereitstellen eines Lasersenders (7), der auf eine gewünschte Höhe einer oberen Fläche einer Schicht (3, 4, 5) eingestellt ist, Bereitstellen eines Laserempfängers (8) auf einer beweglichen Vorrichtung (6, 9) zum Einebnen der betreffenden Schicht, und Bewegen dieser beweglichen Vorrichtung (6, 9), um die Schicht gemäß dem Laser-Bezugspunktgeber (7, 8) einzuebnen.

19. Verfahren nach Anspruch 18, gekennzeichnet durch das Bereitstellen eines Anzeigers (12) einer gewünschten Höhe, der von einer Bedienungsperson der beweglichen Vorrichtung (6, 9) überwacht wird, um Einebnungsmittel der Vorrichtung einzustellen.

20. Verfahren nach Anspruch 18 oder 19, gekennzeichnet durch Bereitstellung einer Brücke, eines Auslegers oder eines Krangerüsts (6), das sich zum Einebnen und/oder Legen einer Schicht quer über den langsamen Sandfilter erstreckt.

21. Verfahren nach Anspruch 19 oder 20, gekennzeichnet durch Bereitstellen einer motorbetriebenen Vorrichtung (14, 16), die über eine Schicht (3, 4, 5) des Betts (1) fahren kann.

22. Verfahren nach Anspruch 18 oder 20, dadurch gekennzeichnete, daß eine bewegliche Vorrichtung Abstreifstangen (11) mit einer im wesentlichen um 90° gewinkelten Ausbildung aufweist.

23. Verfahren nach einem beliebigen der Ansprüche 13 bis 22, gekennzeichnet durch das Legen der Schichten (3, 4, 5) in aufeinanderfolgenden Teilflächengebieten des gesamten Gebiets des langsamen Sandfilters (1), bis das gesamte Flächengebiet mit einem Sandwich aus Sand und körniger Aktivkohle versehen ist.

## Revendications

1. Filtre à gravier à action lente destiné aux travaux de traitement des eaux de bas-fonds pour éliminer les impuretés de l'eau, comprenant du sable et du charbon actif granulaire conçus pour éliminer les impuretés de l'eau, le filtre à gravier à action lente comprenant des couches inférieure et supérieure (4), (5) de sable séparées par une couche de charbon actif granulaire (3), la couche de sable supérieure (5), la couche de sable inférieure (4) et la couche de charbon actif granulaire (3) possédant chacune des surfaces supérieures respectives qui sont égalisées et nivelées pour obtenir des couches possédant une épaisseur désirée.

2. Filtre à gravier à action lente selon la revendication 1, caractérisé par le fait que le filtre comprend une couche unique comprenant du charbon actif granulaire (3) intercalée entre deux couches (4, 5) de sable (2).

3. Filtre à gravier à action lente selon la revendication 2, caractérisé par une couche inférieure (4) de sable (2) dont l'épaisseur se situe dans le domaine d'environ 200 à 400 mm, par une couche (3) de charbon actif dont l'épaisseur se situe dans le domaine d'environ 25 à 200 mm et par une couche supérieure (5) de sable (2) dont l'épaisseur se situe dans le domaine d'environ 300 à 500 mm.

4. Filtre à gravier à action lente selon la revendication 3, caractérisé par le fait que la couche de sable inférieure (4) est d'une épaisseur de sensiblement 300 mm, par le fait que la couche (3) de charbon actif granulaire est d'une épaisseur de sensiblement 135 mm et par le fait que la couche de sable supérieure (5) est d'une épaisseur de sensiblement 450 mm.

5. Filtre à gravier à action lente selon l'une quelconque des revendications précédentes, caractérisé en ce que chaque couche (3, 4, 5) du filtre (1) est nivelée par rapport à une référence à laser (7, 8).

6. Filtre à gravier à action lente selon la revendication 5, caractérisé par le fait que la référence à laser (7, 8) comprend un transmetteur à laser (7) réglé à une hauteur désirée de la surface supérieure d'une couche et un récepteur (8) monté sur un dispositif mobile (6, 9) pour niveler la couche respective à cette hauteur de surface désirée.

7. Filtre à gravier à action lente selon la revendication 6, caractérisé par le fait que le dispositif mobile comprend un pont, une flèche ou un portique (6) s'étendant à travers le filtre à gravier à action lente (1) pour niveler et/ou étaler une couche (3, 4, 5).

8. Filtre à gravier à action lente selon la revendication 7, caractérisé par le fait que le dispositif mobile comprend un dispositif à moteur (14) conçu pour se déplacer sur une couche (3, 4, 5) du lit (1).

9. Filtre a gravier à action lente selon l'une quelconque des revendications précédentes, caractérisé par le fait que le charbon actif granulaire (3) comprend un adjuvant géotextile.

10. Filtre à gravier à action lente selon la revendication 9, caractérisé par le fait que le géotextile comprend deux couches espacées.

11. Filtre à gravier à action lente selon la revendication 9 ou la revendication 10, caractérisé par le fait que le géotextile comprend un sac.

12. Filtre à gravier à action lente selon la revendication 11, caractérisé par le fait que le sac possède une paroi de séparation interne.

13. Procédé de fabrication d'un filtre à gravier à action lente destiné aux travaux de traitement des eaux de bas-fonds pour éliminer les impuretés de l'eau, comprenant le fait de prévoir du sable et du charbon actif granulaire conçus pour éliminer les impuretés du liquide, étaler le sable en couches (4), (5) séparées par une couche de charbon actif granulaire (3), et égaliser et niveler les surfaces supérieures respectives de chacune des couches (3), (4) et (5) de telle sorte qu'elles possèdent chacune une surface supérieure égalisée et nivelée pour ainsi obtenir des couches possédant une épaisseur désirée.

14. Procédé selon la revendication 13, caractérisé par le fait d'étaler une seule couche (4) de sable (2), d'étaler une seule couche (3) de charbon actif granulaire sur la couche (4) de sable et d'étaler une couche supplémentaire (5) de sable sur la couche de charbon actif granulaire (3).

15. Procédé selon la revendication 14, caractérisé par les étapes consistant à :
- étaler la couche mentionnée en premier lieu ou couche de sable inférieure (4) possédant une épaisseur dans le domaine d'environ 200 à 400 mm,
- étaler la couche (3) de charbon actif granulaire possédant une épaisseur dans le domaine d'environ 25 - 200 mm, et
- étaler la couche mentionnée en second lieu ou couche de sable supérieure (5) sur la couche (3) de charbon actif granulaire possédant une épaisseur dans le domaine d'environ 300 à 500 mm.

16. Procédé selon la revendication 15, caractérisé par les étapes consistant à :
- étaler la couche de sable inférieure (4) pour qu'elle possède une épaisseur de sensiblement 300 mm,
- étaler la couche (3) de charbon actif granulaire pour qu'elle possède une épaisseur de sensiblement 135 mm, et
- étaler la couche de sable supérieure (5) pour qu'elle possède une épaisseur de sensiblement 450 mm.

17. Procédé selon l'une quelconque des revendications 14 à 16, caractérisé par le fait de niveler les surfaces supérieures d'au moins la couche de sable inférieure (4) et la couche (3) de charbon actif granulaire en utilisant une référence à laser (7, 8).

18. Procédé selon la revendication 17, caractérisé par le fait :
- de prévoir un transmetteur à laser (7) réglé à une hauteur désirée de la surface supérieure d'une couche (3, 4, 5).
- de prévoir un récepteur à laser (8) sur un dispositif mobile (6, 9) pour niveler la couche respective, et
- de déplacer ce dispositif mobile (6, 9) pour niveler la couche en fonction de la référence à laser (7, 8).

19. Procédé selon la revendication 18, caractérisé par le fait de prévoir un indicateur (12) d'un niveau désiré, ledit indicateur étant surveillé par un opérateur du dispositif mobile (6, 9) pour régler le moyen de nivellement du dispositif.

20. Procédé selon la revendication 18 ou 19, caractérisé par le fait de prévoir un pont, une flèche ou un portique (6) s'étendant à travers le filtre à gravier à action lente, pour niveler et/ou étaler une couche.

21. Procédé selon la revendication 19 ou 20, caractérisé par le fait de prévoir un dispositif à moteur (14, 16) conçu pour fonctionner sur une couche (3, 4, 5) du lit (1).

22. Procédé selon la revendication 18 ou 20, caractérisé par le fait de prévoir un dispositif mobile possédant des barres à racloirs (11) dont la configuration forme un angle de sensiblement 90°.

23. Procédé selon l'une quelconque des revendications 13 à 22, caractérisé par les étapes consistant à étaler les couches (3, 4, 5) dans des aires de surfaces partielles successives de l'aire de surface totale du filtre à gravier à action lente (1) jusqu'à ce que l'aire de surface totale soit munie d'un sandwich de sable et de charbon actif granulaire.
